Europäisches Patentamt

European Patent Office

Office européen des brevets

(19)

(11) Numéro de publication: **0 193 417**

**A1**

(12) **DEMANDE DE BREVET EUROPEEN**

(21) Numéro de dépôt: **86400066.6**

(22) Date de dépôt: **14.01.86**

(51) Int. Cl.4: **G11C 19/00** , G06F 12/04 , G06F 13/40 , G06F 3/12

(30) Priorité: **24.01.85 FR 8500970**

(43) Date de publication de la demande:
**03.09.86 Bulletin 86/36**

(84) Etats contractants désignés:
**DE GB IT**

(71) Demandeur: **Brion, Alain**
**15, rue Kermen**
**F-92140 Clamart(FR)**

(72) Inventeur: **Brion, Alain**
**15, rue Kermen**
**F-92140 Clamart(FR)**

(74) Mandataire: **Mongrédien, André et al**
**c/o BREVATOME 25, rue de Ponthieu**
**F-75008 Paris(FR)**

(54) **Dispositif d'échange de données entre un calculateur et une unité périphérique.**

(57) Dispositif d'échange de données entre un calculateur (1) et une unité périphérique (2).

Les données fournies par le calculateur sont des mots de N éléments binaires et les données reçues par l'unité périphérique sont des mots de P éléments binaires. Le dispositif comprend une mémoire (3) constituée par P registres à décalages (4) de N éléments binaires, un circuit de décodage d'adresses (5) pour adresser les registres lors des échanges de données, une unité de commande (8) recevant du circuit de décodage, un signal de commande des décalages dans les registres. Ces registres sont reliés au calculateur (1) pour recevoir P mots de N éléments binaires qui sont transférés à l'unité périphérique (2). Ils permettent aussi de transférer vers le calculateur N mots de P éléments binaires lorsque l'unité périphérique fournit P mots de N éléments binaires.

Application aux échanges de données entre un calculateur et une unité périphérique.

FIG. 2

EP 0 193 417 A1

## Dispositif d'échange de données entre un calculateur et une unité périphérique

La présente invention concerne un dispositif d'échange de données entre un calculateur et une unité périphérique.

Elle s'applique aux échanges de données entre un calculateur et une unité périphérique; dans ces échanges, les données sont groupées sous forme de mots qui présentent une taille différente pour le calculateur et pour l'unité périphérique.

L'invention s'applique plus particulièrement aux échanges de données, sous forme de mots, entre un calculateur et une imprimante.

On sait que certaines unités périphériques doivent recevoir d'un calculateur, des mots de données présentant une taille prédéterminée. Or très souvent, les mots fournis par le calculateur ont une taille qui n'est pas compatible avec la taille des mots que peut traiter l'unité périphérique.

C'est le cas par exemple de certaines imprimantes graphiques qui doivent recevoir simultanément des données correspondant à un certain nombre de lignes consécutives: dans le calculateur, chaque ligne est représentée par une suite de mots dans laquelle chaque mot correspond à des points juxtaposés d'une ligne de l'image graphique tracée par l'imprimante. Il faut donc envoyer à l'unité périphérique (imprimante dans l'exemple considéré), des mots de données dont la taille est différente de celle des mots du calculateur, les données de chaque mot reçu par l'unité périphérique correspondant à des points superposés d'une colonne de l'image graphique.

Dans certaines autres applications, c'est au contraire l'unité périphérique qui doit transmettre au calculateur des mots dont la taille ne correspond pas à celle des mots que ce calculateur peut accepter.

Les procédés connus, qui permettent par exemple à un calculateur d'envoyer à une unité périphérique, des mots tels que ce calculateur les manipule, et qui permettent à l'unité périphérique de les recevoir tels qu'elle en a besoin, sont de deux types:

-l'un des procédés consiste à enregistrer dans la mémoire du calculateur des données codées de façon compatible directement avec le périphérique et à exécuter les traitements directment dans ce format. Si les tailles de mots ne sont pas compatibles, cela suppose qu'on utilise soit plusieurs mots du calculateur pour un mot du périphérique, soit au contraire, une partie de mot du calculateur pour un mot du périphérique. Ceci constitue un premier inconvénient. De plus, les traitements peuvent être inapplicables à ce codage des données. C'est ainsi par exemple, que dans le cas d'une imprimante le calculateur produit une suite de mots pour chaque ligne de l'image graphique et que l'unité périphérique doit recevoir des mots correspondant à des points superposés d'une colonne de cette image graphique. L'un des procédés connus consiste à représenter l'image à obtenir de manière interne, dans l'ordinateur, par des mots représentant des points d'une même colonne. Ce type de procédé n'est pas compatible avec les mémoires d'écran, car le balayage de l'écran est horizontal. Il n'est pas compatible non plus avec les méthodes de compression d'image qui privilégient la direction horizontale.

-un autre type de procédé connu utilise le calculateur lui-même effectuer le transcodage des mots. Les instructions habituelles des calculateurs sont toutefois mal adaptées à ce traitement et il en résulte des durées excessives de traitement. Par exemple, un micro-processeur moderne met 4 secondes pour retourner une image de 4 millions de points. Cette durée n'est pas compatible avec une impression de masse comme le permet par exemple une imprimante à laser. De plus, la sortie des données doit se faire par des mots de la taille exigée par l'imprimante. C'est ainsi par exemple, que pour une machine de télécopie fonctionnant selon le standard du groupe 4, le calculateur doit manipuler des mots de 8 éléments binaires, ce qui n'est pas efficace et exige la mobilisation à plein temps du calculateur, pendant toute la durée de l'impression d'une page.

L'invention a pour but de remédier à ces inconvénients et notamment de réaliser un dispositif d'échange de données entre un calculateur et une unité périphérique, grâce auquel lorsque le calculateur fournit par exemple P mots de N éléments binaires, l'unité périphérique reçoit N mots de P éléments binaires (P étant la taille des mots que l'unité périphérique peut accepter) ; selon une variante, ce dispositif permet aussi au calculateur de recevoir P mots de N éléments binaires lorsque le périphérique fournit N mots de P éléments binaires.

L'invention a pour objet un dispositif d'échange de données entre un calculateur et une unité périphérique, les données fournies par le calculateur étant des mots de N éléments binaires et les données reçues par l'unité périphérique étant des mots de P éléments binaires, N et P étant des entiers, caractérisé en ce qu'il comprend au moins une mémoire constituée par P registres à décalages de N éléments binaires, un circuit de décodage d'adresses relié aux registres à décalages et au calculateur pour adresser ces registres lors des échanges de données, une unité de commande reliée à des entrées de commande des décalages dans ces registres et à une sortie de commande du circuit de décodage pour recevoir un signal de commande des décalages dans les registres, ces registres à décalages ayant chacun N entrées parallèles reliées au calculateur pour recevoir P mots de N éléments binaires, chaque registre ayant une sortie série, les P sorties séries des P registres étant reliées à des entrées de L'unité périphérique par un moyen de transfert pour lui transférer les P mots de N éléments binaires contenus dans les registres à décalages.

Selon une autre caractéristique, les registres à décalages comprennent en outre chacun une entrée série, les P entrées séries de ces registres étant reliées à des sorties de L'unité périphérique par un autre moyen de transfert pour recevoir N mots de P éléments binaires, ces registres ayant en outre chacun P sorties parallèles reliées à des entrées du calculateur pour lui transférer les P mots de N éléments binaires contenus dans les registres à décalages, ledit autre moyen de transfert intervenant dans un échange de données entre l'unité périphérique et le calculateur.

Selon une autre caractéristique, le moyen de transfert reliant les P sorties des registres avec des entrées de l'unité périphérique, est constitué par un bus.

Selon une autre caractéristique, l'autre moyen de transfert reliant des sorties de l'unité périphérique aux P entrées séries des registres, est constitué par un autre bus.

Selon une autre caractéristique, le moyen de transfert comprend une mémoire organisée en file de type FIFO, capable d'enregistrer au moins N mots de P éléments binaires, P entrées de cette mémoire étant reliées aux P sorties des registres à décalages et P sorties de cette mémoire étant reliées aux entrées de l'unité périphérique, l'unité de commande ayant au moins une sortie reliée à une entrée de commande de la mémoire en file pour lui fournir un signal fixant le rythme de réception par cette mémoire de N mots de P éléments binaires provenant des registres à décalages ou le rythme de transmission vers l'unité périphérique de N mots de P éléments binaires contenus dans la mémoire en file.

Selon une autre caractéristique, l'autre moyen de transfert comprend une mémoire en file de type FIFO, capable d'enregistrer au moins N mots de P éléments binaires, P entrées de cette mémoire en file étant reliées aux sorties de l'unité périphérique pour recevoir N mots de P éléments binaires, et P sorties de cette mémoire en file étant reliées aux P entrées séries des registres à décalages, l'unité de commande ayant au moins une sortie reliée à une entrée de commande de la mémoire en file pour lui fournir un signal fixant le rythme de réception par cette mémoire, de N mots de P éléments binaires provenant de l'unité périphérique, ou le rythme de transmission vers les registres à décalages, de N mots de P éléments binaires contenus dans cette mémoire en file.

Selon une autre caractéristique, les P entrées de la mémoire en file sont reliées aux P sorties séries des registres à décalages par un bus à trois états, et les P sorties de la mémoire en file sont reliées aux entrées de l'unité périphérique, par un bus à trois états.

Selon une autre caractéristique, les sorties de l'unité périphérique sont reliées aux P entrées de la mémoire en file, par un bus à trois états, et les P sorties de la mémoire en file sont reliées aux P entrées séries des registres à décalages, par un bus à trois états.

Selon une autre caractéristique, une entrée de l'unité de commande est reliée à une sortie d'état de la mémoire en file, pour recevoir un signal d'indication de l'état de la file dans cette mémoire.

Selon une autre caractéristique, une entrée de calculateur est reliée à une sortie d'état de la mémoire en file pour recevoir un signal d'indication de l'état de la file dans la mémoire.

Selon une autre caractéristique, une entrée de calculateur est reliée à une sortie de l'unité de commande pour recevoir un signal indiquant que les registres à décalages sont vides, lorsque les mots contenus dans ceux-ci ont été transférés.

Selon une autre caractéristique, la sortie du circuit de commande est reliée à l'entrée de la mémoire en file, par un aiguilleur.

Les caractéristiques et avantages de l'invention ressortiront mieux de la description qui va suivre, donnée en référence aux dessins annexés dans lesquels :

-La figure 1 représente schématiquement un premier mode de réalisation du dispositif de l'invention,

-La figure 2 représente un deuxième mode de réalisation du dispositif de l'invention.

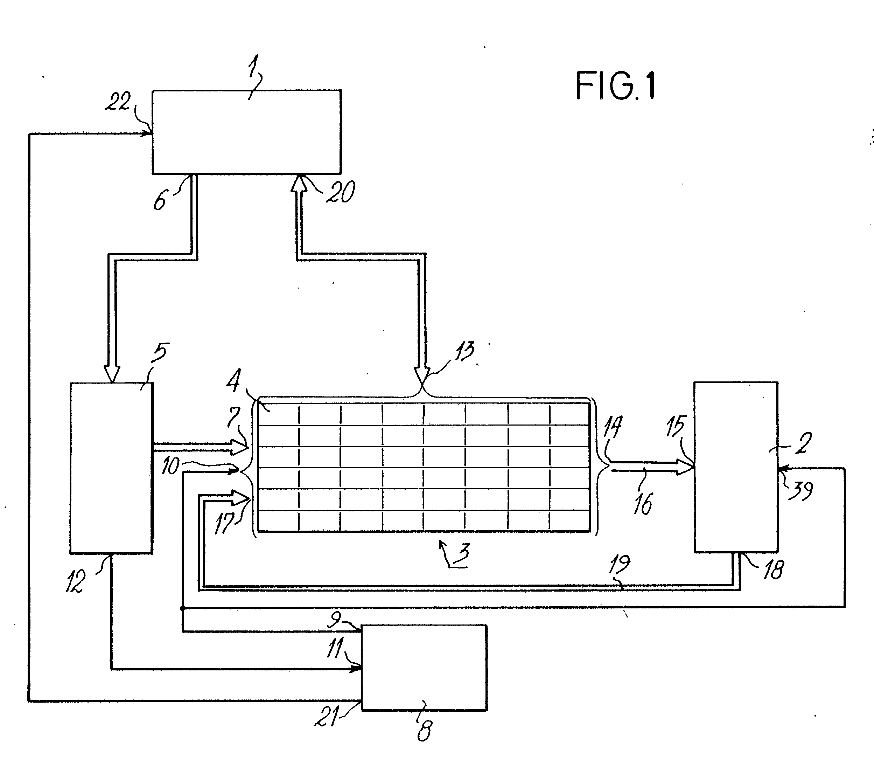

La figure 1 représente schématiquement un premier mode de réalisation d'un dispositif d'échange de données conforme à l'invention. Selon une première variante de ce premier mode de réalisation, le dispositif permet de transmettre des données du calculateur 1 vers l'unité périphérique 2. Les données fournies par le calculateur sont des mots de N éléments binaires tandis que les données reçues par l'unité périphérique doivent être des mots de P éléments binaires. N et P sont bien entendu des nombres entiers. Le dispositif comprend au moins une mémoire 3 constituée par P registres à décalages de N éléments binaires. Dans l'exemple représenté sur cette figure, la mémoire 3 comprend six registres à décalages, tels que le registre 4, chacun de ces registres étant capable d'enregistrer 8 éléments binaires. (P = 6, N = 8). Le dispositif comprend aussi un dispositif de décodage d'adresse 5 (par exemple de type 74 LS 138 commercialisé par TEXAS INSTRUMENTS) qui est relié à des sorties de commande et d'adresse 6 du calculateur et à des entrées d'adressage 7, des registres à décalages 4. Le dispositif comprend aussi une unité de commande 8, qui est reliée par une sortie 9, à des entrées de commande 10 de décalages dans les registres 4 et à une entrée de commande 39 de l'unité périphérique 2. Cette unité de commande est aussi reliée par un entrée 11, à une sortie de commande 12 du circuit de décodage, pour recevoir de ce circuit, un signal de commande des décalages dans les registres 4. Dans cette première variante du premier mode de réalisation du dispositif de l'invention, les registres à décalages comprennent chacun, N entrées parallèles 13, reliées au calculateur 1, pour recevoir de celui-ci P mots de N éléments binaires (6 mots de 8 éléments binaires dans l'exemple représenté). Chaque registre à décalages 4 comprend une sortie série. Les P sorties série 14 (6 sorties série dans l'exemple représenté) des registres à décalages, sont reliées à des entrées 15 de l'unité périphérique 2 par un moyen de transfert 16. Ce moyen de transfert permet de transférer les P mots de N éléments binaires qui sont contenus dans le registre à décalages vers l'unité périphérique 2, sous forme de N mots de P éléments binaires, comme on le verra plus loin en détail. Le moyen de transfert 16 est ici constitué par un bus.

Dans une seconde variante de ce premier mode de réalisation, l'unité périphérique 2 transmet vers le calculateur 1, N mots de P éléments binaires, alors que le calculateur ne peut accepter que des mots de N éléments binaires ; les registres à décalages comprennent alors chacun une entrée série. Les P entrées série sont représentées en 17 sur la figure, elles sont reliées à des sorties 18 de l'unité périphérique 2, par un autre moyen de transfert 19, pour que ces registres reçoivent à chaque séquence de fonctionnement N mots de P éléments binaires. Dans cette seconde variante, les registres à décalages 4 comprennent chacun, P sorties parallèles, reliées à des entrées 20 du calculateur 1 pour lui transférer P mots de N éléments binaires qu'ils contiennent lorsque l'unité périphérique 2 les a complètement remplis. L'autre moyen de transfert 19 est ici aussi constitué par un bus.

L'unité de commande 8 n'a pas été représentée en détail ; elle est constituée par exemple par une horloge reliée à un compteur. Les entrées et sorties de ce circuit de commande sont en fait des entrées et sorties du compteur. La sortie 9 du circuit de commande commande les décalages dans les registres 4 de la mémoire 3 et le transfert des données vers ou en provenance de l'unité périphérique 2. Le déclenchement de ces décalages est commandé par un signal qui est fourni sur la sortie 12 du circuit de décodage 5 et qui est appliqué sur une entrée 11 du circuit de commande 8. Le circuit de décodage d'adresse 5 est commandé par le calculateur 1 qui fournit sur ses sorties 6 des signaux codés d'adresse appliqués au circuit de décodage 5. Ce circuit de décodage permet d'adresser successivement les registres à décalages de la mémoire 3. Pour chaque adresse, la sortie 12 du circuit de décodage 5 applique sur l'entrée 11 du compteur du circuit de commande 8, un signal de commande pour que ce circuit fournisse sur sa sortie 9, le nombre d'impulsions nécessaires aux décalages des données dans chacun des

registres 4. Le circuit de commande 8 comprend également une sortie 21 qui est reliée à une entrée 22 du calculateur 1, pour lui appliquer un signal indiquant que les registres à décalages sont vides. Ce signal est fourni sur la sortie 21 de l'unité 8 de commande, lorsque tous les mots contenus dans les registres à décalages ont été transférés vers/ou de l'unité périphérique 2.

Dans la première variante de ce premier mode de réalisation, le calculateur transfère les données vers les P registres à décalages de la mémoire 3 en les adressant successivement grâce au circuit de décodage 5. Dès que tous les registres à décalages 4 ont été chargés, le circuit de commande en est averti par un signal appliqué sur son entrée 11, par le circuit de décodage 5. Le circuit de commande commence alors la série suivante de N décalages en envoyant successivement N impulsions sur sa sortie 9. Les impulsions provoquent N décalages dans le registres 4 et le transfert de N mots de P bits vers l'unité périphérique 2, grâce à un signal de commande appliqué sur une entrée 39 de cette unité par la sortie 9 du circuit de commande 8.

Dans la deuxième variante de ce premier mode de réalisation, le calculateur est averti par un signal appliqué sur son entrée 22 par l'unité de commande 8, que la série des décalages dans les registres est terminée; il lit les données présentes dans les registres à décalages 4, en les adressant successivement grâce au circuit de décodage 5. Dès que tous les registres à décalages ont été lus, le circuit de commande 8 en est averti par un signal appliqué sur son entrée 11 par le circuit de décodage 5 ; le circuit de commande commence la série suivante de N décalages en envoyant successivement N impulsions sur sa sortie 9 ; ces impulsions provoquent N décalages dans les registres 4 et le transfert de N mots de P bits en sortie de l'unité périphérique 2, grâce à un signal de commande appliqué sur l'entrée 39 de cette unité par la sortie 9 du circuit de commande 8.

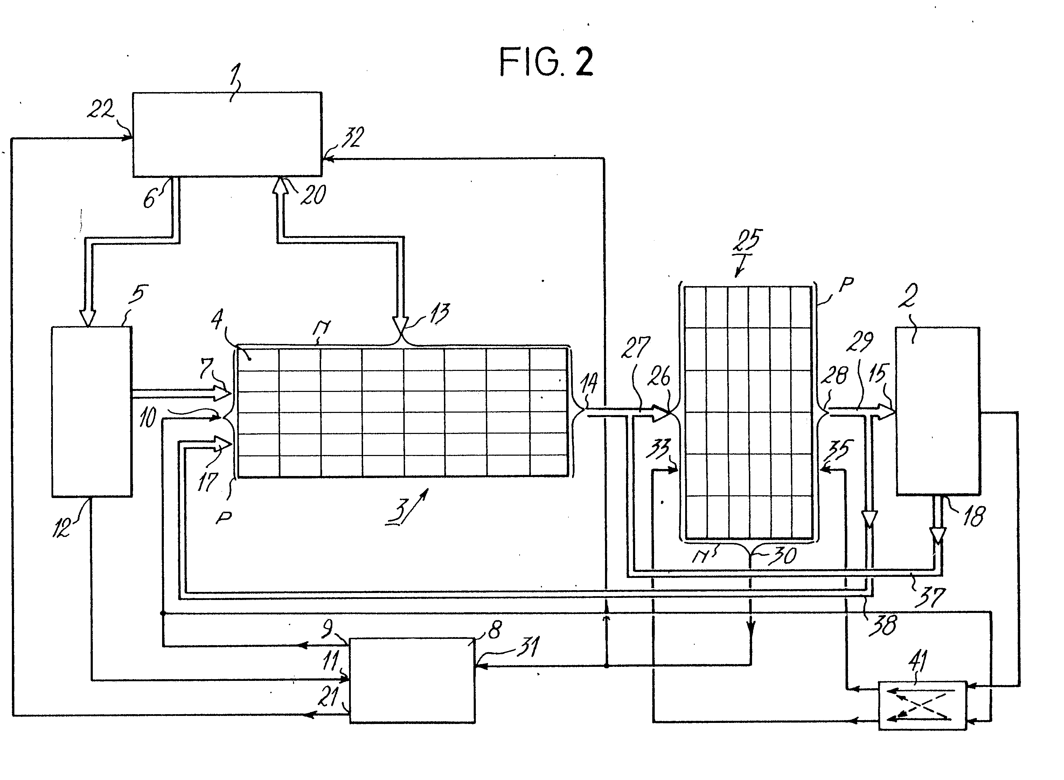

La figure 2 représente schématiquement un deuxième mode de réalisation du dispositif de l'invention. Les mêmes éléments portent les mêmes références sur cette figure et sur la figure 1. Dans un première variante de ce deuxième mode de réalisation du dispositif de l'invention, les données sont transférées du calculateur 1 vers le périphérique 2, comme précédemment, en appliquant P mots de N éléments binaires sur les entrées parallèles 13 des registres à décalages 4 de la mémoire 3. L'adressage de ces registres est effectué comme indiqué plus haut, par le circuit de décodage 5 ; ce circuit applique des signaux d'adressage sur les entrées d'adressage 7 des registres 4. Lors d'un échange de données vers l'unité périphérique 2, N mots de P éléments binaires peuvent être transférés. Le moyen de transfert comprend une mémoire en file 25 de type FIFO, qui peut enregistrer au moins N mots de P éléments binaires. Dans cette première variante, les P sorties série 14 des registres à décalages 4 sont reliées à P entrées 26 de la mémoire en file 25, de préférence par un bus 27 à trois états. Cette mémoire comprend P sorties 28 qui sont reliées aux entrées 15 de l'unité périphérique 2, de préférence par un bus 29. Une sortie d'état 30 de la mémoire en file 25 est reliée à une entrée 31 de l'unité de commande 8 et/ou à une entrée 32 du calculateur 1, pour fournir au circuit de commande 8 et/ou au calculateur 1, un signal indiquant l'état de remplissage de la file de la mémoire 25. Ce signal indique par exemple que la file est à moitié vide ou à moitié pleine ; cette information est importante pour continuer à effectuer ou arrêter le remplissage de la mémoire 25.

Dans cette première variante, la sortie 9 de l'unité de commande 8 est reliée, par l'intermédiaire d'un aiguilleur 41, à une entrée 33 de commande d'entrée de données de la mémoire en file 25. Une sortie 40 de séquencement du transfert de données de l'unité périphérique 2 est reliée par ce même aiguilleur à une entrée 35 de commande de sortie de données de la mémoire en file 25. Cet aiguilleur 41 est par exemple constitué par deux multiplexeurs à deux voies d'un quadruple multiplexeur de type SN 75157 commercialisé par la Société TEXAS INSTRUMENTS.

Dans cette première variante du deuxième mode de réalisation du dispositif de l'invention P mots de N éléments binaires sont fournis par le calculateur ; les P mots sont appliqués successivement sur les entrées parallèles des registres à décalages 4, grâce à un adressage successif de ces registres par le circuit de décodage d'adresse 5. Lorsque les registres à décalages sont pleins, le circuit de commande 8 transmet sur sa sortie 9, des impulsions de commande de décalages sur les entrées de commande de décalages 10, des registres 4 ; ces impulsions assurent en même temps, l'entrée des données dans la mémoire en file 25, grâce à un signal de commande appliqué sur l'entrée 33 de cette mémoire. Lorsque N impulsions de décalages ont été appliquées sur les entrées 10, N mots de P éléments binaires ont été transférés dans la mémoire en file 25, par le bus 27. La sortie 21 de l'unité de commande 8 applique alors sur l'entrée 22 du calculateur 1, un signal indiquant que les registres à décalages sont vides et qu'ils peuvent être à nouveau remplis. Le signal d'état sur la sortie 30 de la mémoire 25 indique en permanence à l'unité de commande 8, l'état de la file de mots dans la mémoire en file 25. Cette mémoire reçoit sur son entrée d'écriture 33 à l'instant ou débute le transfert des mots contenus dans les registres 4, un signal provenant de l'unité de commande 8, pour permettre l'écriture des mots dans la mémoire 25, en synchronisme avec les impulsions de décalages appliquées sur les entrées de décalages 10 des registres 4. En même temps, et à son propre rythme, l'unité périphérique 2 prend les données provenant de la mémoire en file 25 de façon totalement asynchrone. A cet effet, la sortie 40 de l'unité périphérique 2 est reliée, par l'aiguilleur 41, à une entrée 35 de commande de sortie de données de la mémoire en file 25.

Selon une autre variante de ce deuxième mode de réalisation, le dispositif permet de transférer N mots de P éléments binaires, de l'unité périphérique 2 vers le calculateur 1, pour que celui-ci reçoive P mots de N éléments binaires. Ce transfert est effectué grâce à un autre moyen de transfert qui comprend, comme dans la première variante de ce deuxième mode de réalisation, la mémoire en file 25, de type FIFO, capable d'enregistrer au moins N mots de P éléments binaires. Les P entrées 26 de cette mémoire, sont reliées aux sorties 18 de l'unité périphérique 2, par un bus 37 à trois états. Les P sorties 28 de la mémoire 25 sont reliées aux P entrées série 17 des registres à décalages 4 de la mémoire 3, par un bus 38. Les N mots de P éléments binaires sont transmis à la mémoire en file 25 par l'unité périphérique, à son propre rythme. L'unité périphérique 2 envoie les données dans la mémoire en file 25, grâce à un signal de commande fourni par sa sortie 40, reliée par l'intermédiaire de l'aiguilleur 41 à l'entrée 33 de commande d'entrée de données de la mémoire en file 25. Lorsque celle-ci est suffisamment pleine, l'unité de commande est prévenue par un signal appliqué sur son entrée 31 par la sortie d'état 30 de la mémoire en file 25. Ce signal permet à l'unité de commande 8 d'appliquer sur l'entrée 35 un signal de commande de lecture de N mots contenus dans cette mémoire. Ces N mots sont transmis successivement, par le bus 38, vers les entrées série 17 des registres à décalages 4 de la mémoire 3. Les P éléments binaires de chaque mot, appliqués sur les entrées série 17 des registres 4 sont décalés dans ces registres, grâce à des impulsions de décalages fournies par l'unité de commande 8, sur les entrées de décalages 10 des registres 4. Ces impulsions commandent aussi la sortie des données de la mémoire en file 25, par l'intermédiaire de l'aiguilleur 41 qui relie la sortie 9 de l'unité de commande 8 avec une entrée 35 de commande de sortie des données de la mémoire en file 25. Lorsque les registres 4 sont remplis, le calculateur commande l'adressage de ces registres par le circuit de décodage 5, pour que P mots de N éléments binaires lui soient transmis successivement, par les sortie parallèles des registres 4. Ces P mots sont appliqués sur les entrées 20 du calculateur 1. La sortie 12 du circuit de décodage indique au circuit de commande que le calculateur a lu les P mots. Comme dans la première variante de ce deuxième mode de réalisation, la sortie d'état 30 de la mémoire en file 25 est reliée à l'entrée 32 du calculateur 1 et/ou à l'entrée 31 de l'unité de commande 8, pour fournir à chaque instant un signal indiquant l'état de remplissage de la file dans la mémoire 25. Le signal fourni sur la sortie 36 de l'unité périphérique 2 permet de contrôler le flux de transmission des mots fournis par l'unité périphérique 8.

L'unité de commande 8 constituée par une horloge reliée à un compteur, est par exemple réalisée à partir de circuits· de type 74LS74.

**Revendications**

1. Dispositif d'échange de données entre un calculateur - (1) et une unité périphérique (2), les données fournies par le calculateur (1) étant des mots de N éléments binaires et les données reçues par l'unité périphérique (2) étant des mots de P éléments binaires, N et P étant des entiers, caractérisé en ce qu'il comprend au moins une mémoire - (3) constituée par P registres à décalages (4) de N éléments binaires, un circuit de décodage d'adresse (5) relié aux registres à décalages (4) et au calculateur (1) pour adresser ces registres lors des échanges de données, une unité de commande (8) reliée à des entrées de commande des décalages dans ces registres et à une sortie de commande (12) du circuit de décodage (5) pour recevoir un signal de commande des décalages dans les registres, ces registres à décalages ayant chacun N entrées parallèles - (13) reliées au calculateur (1) pour recevoir P mots de N éléments binaires, chaque registre ayant une sortie série, les P sorties série (14) des P registres étant reliées à des entrées (15) de l'unité périphérique (2) par un moyen de transfert (16) pour lui transférer les P mots de N éléments binaires contenus dans les registres à décalages (4).

2. Dispositif selon la revendication 1, caractérisé en ce que les registres à décalages (4) comprennent en outre chacun une entrée série, les P entrées séries (17) de ces registres étant reliées à des sorties (18) de l'unité périphérique par un autre moyen de transfert (19) pour recevoir N mots de P éléments binaires, ces registres ayant en outre chacun P sorties parallèles reliées à des entrées (20) du calculateur - (1) pour lui transférer les P mots de N éléments binaires contenus dans les registres à décalages (4), ledit autre moyen de transfert (19) intervenant dans un échange de données entre l'unité périphérique (2) et le calculateur (1).

3. Dispositif selon la revendication 1, caractérisé en ce que le moyen de transfert (16) reliant les P sorties (14) des registres avec des entrées (15) de l'unité périphérique, est constitué par un bus.

4. Dispositif selon la revendication 2, caractérisé en ce que l'autre moyen de transfert (19) reliant des sorties (18) de l'unité périphérique aux P entrées série (17) des registres est constitué par un autre bus.

5. Dispositif selon la revendication 1, caractérisé en ce que le moyen de transfert comprend une mémoire (25) organisée en file de type FIFO, capable d'enregistrer au moins N mots de P éléments binaires, P entrées (26) de cette mémoire étant reliées aux P sorties (14) séries des registres à décalages (4) et P sorties (28) de cette mémoire - (25) étant reliées aux entrées (15) de l'unité périphérique, l'unité de commande (8) ayant au moins une sortie (9) reliée à une entrée de commande (33) de la mémoire en file pour lui fournir un signal fixant le rythme de réception par cette mémoire de N mots de P éléments binaires provenant des registres à décalages (4).

6. Dispositif selon la revendication 2, caractérisé en ce que ledit autre moyen de transfert comprend une mémoire (25) en file de type FIFO, capable d'enregistrer au moins N mots de P éléments binaires, P entrées (26) de cette mémoire en file étant reliées aux sorties (18) de l'unité périphérique (2) pour recevoir N mots de P éléments binaires, et P sorties (28) de cette mémoire en file étant reliées aux P entrées séries (17) des registres à décalages (4), l'unité de commande (8) ayant au moins une sortie (9) reliée à une entrée (35) de commande de la mémoire en file pour lui fournir un signal fixant le rythme de réception par cette mémoire, de N mots de P éléments binaires provenant de l'unité périphérique (2), ou le rythme de transmission vers les registres à décalages, de N mots de P éléments binaires contenus dans cette mémoire en file.

7. Dispositif selon la revendication 5, caractérisé en ce que les P entrées (26) de la mémoire en file sont reliées aux P sorties séries (14) des registres à décalages par un bus - (27) à trois états et les P sorties (28) de la mémoire en file (25) sont reliées aux entrées (15) de l'unité périphérique, par un bus (29).

8. Dispositif selon la revendication 6, caractérisé en ce que les sorties (18) de l'unité périphérique sont reliées aux P entrées (26) de la mémoire en file (25) par un bus (37) à trois états, et les P sorties (28) de la mémoire en file sont reliées aux P entrées séries (17) des registres à décalages (4), par un bus (38).

9. Dispositif selon l'une quelconque des revendications 5 à 8, caractérisé en ce qu'une entrée (31) de l'unité de commande (8) est reliée à une sortie d'état (30) de la mémoire en file, pour recevoir un signal d'indication de l'état de la file dans cette mémoire.

10. Dispositif selon l'une quelconque des revendications 5 à 8, caractérisé en ce qu'une entrée (32) du calculateur (1) est reliée à une sortie d'état (30) de la mémoire en file pour recevoir un signal d'indication de l'état de la file dans la mémoire (25).

11. Dispositif selon l'une quelconque des revendications 1 à 6, caractérisé en ce qu'une entrée (22) du calculateur (1) est reliée à une sortie (21) de l'unité de commande (8) pour recevoir un signal indiquant que les registres à décalages (4) sont vides ou pleins, lorsque les mots contenus dans ceux-ci ont été transférés.

12. Dispositif selon l'une quelconque des revendications 5 et 6, caractérisé en ce que la sortie de l'unité de commande est reliée à l'entrée (33 ou 35) de la mémoire en file, par un aiguilleur (41).

FIG.1

0 193 417

# FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 278 114 (LE MATERIEL TELEPHONIQUE) * Page 2, ligne 14 - page 3, ligne 27; figures 1,2 * | 1-4 | G 11 C 19/00 G 06 F 12/04 G 06 F 13/40 G 06 F 3/12 |
| | --- | | |
| Y | US-A-4 153 950 (NOSOWICZ et al.) * Abrégé; colonne 2, ligne 5 - colonne 3, ligne 5; figure 1 * | 1-4 | |
| | --- | | |
| A | EP-A-0 127 007 (IBM) * Abrégé * | 1 | |
| | ----- | | |

DOMAINES TECHNIQUES RECHERCHES (Int. Cl.4)

G 11 C 19/00
G 06 F 13/40
G 06 F 12/04
G 06 F 13/38
G 06 F 3/12

Le présent rapport de recherche a été établi pour toutes les revendications

| Lieu de la recherche | Date d'achèvement de la recherche | Examinateur |
|---|---|---|
| LA HAYE | 29-04-1986 | CERVANTES J.P.J. |